# EUROPEAN PATENT APPLICATION

(11) **EP 4 708 844 A1**
(43) Date of publication of application: **11.03.2026**
(21) Application number: 25198266.6
(22) Date of filing: 26.08.2025
(51) Int. Cl.: H04N 13/296, H04N 23/73

(54) **IMAGE CAPTURING APPARATUS, INFORMATION PROCESSING METHOD, AND STORAGE MEDIUM**

(30) Priority: 09.09.2024 JP 2024154486
(71) Applicant: Canon Kabushiki Kaisha, Tokyo, 146-8501 (JP)
(72) Inventor: OTSUBO, Masatoshi, Tokyo, 146-8501 (JP)
(74) Representative: Canon Europe Limited

(57) **Abstract**

In a case where it is determined that a ranging image in which an object is not to be detected exists and it is determined that a situation where an automobile currently travels is a situation where jumping-in or cutting-in is likely to occur, an exposure start timing of one of cameras (100A, 100B) constituting a stereo camera is shifted.

## Description

### TECHNICAL FIELD

The present disclosure relates to an image capturing apparatus which performs an object detection by acquiring a parallax based on a plurality of images and which is mounted to a vehicle, an information processing method, and a storage medium.

### BACKGROUND

In recent years, an automobile has been equipped with a function of detecting an obstacle on a travel path of the automobile and automatically decelerating or stopping the automobile. This is a so-called advanced driver assistance system (ADAS).

As one of techniques of this ADAS for detecting the obstacle, a stereo camera has been proposed. This stereo camera can perform a triangulation by using a parallax of two cameras to measure a distance to the obstacle. This scheme is referred to as a stereo ranging scheme in this application. The stereo camera can also be said to be a camera configured to measure the distance based on a parallax of two captured images respectively acquired from two image capturing units. The stereo ranging scheme has such a characteristic that as an interval between two cameras (= a base line length) is wider, an accuracy in a long distance is higher, and as the interval is narrower, an accuracy in a short distance is higher. In view of the above, in related art, Japanese Patent Laid-Open No. 2020-53950 describes a technique in which to ensure the ranging accuracy from the short distance to the long distance, a plurality of pairs of cameras with different base line lengths are arranged, or a plurality of pairs thereof are provided. According to Japanese Patent Laid-Open No. 2020-53950, it is necessary to prepare two sets of stereo cameras (four cameras), and there is a cost disadvantage.

As one of solutions, in Japanese Patent Laid-Open No. 2011-203238, a system that also uses a ranging scheme using an image plane phase difference has also been proposed. This scheme includes a camera configured to perform ranging by using a sensor in which two pixels (in an ordinary configuration, one pixel) are arranged under each of microlenses arranged on an image capturing sensor and which can acquire two images with different view points by the image capturing sensor. This camera can also be said to be a camera capable of performing the ranging using an image plane phase difference of a pupil split scheme constituted by one imaging optical system and one image capturing element.

Alternatively, this camera can also be said to be a compound eye camera provided with a lens array having a plurality of lenses arranged on the same plane and a sensor that is a camera capable of performing the ranging based on a parallax of a plurality of individual eye images captured by the compound eye camera. As being originally adopted for autofocus (AF) in a single lens reflex camera, this scheme is referred to as a dualpixel AF (DAF) ranging scheme in this application. Japanese Patent Laid-Open No. 2011-203238 introduces a system in which two cameras of the DAF ranging scheme are prepared, the stereo ranging is performed for the long distance ranging by using images respectively output from two cameras, and the DAF ranging based on a single camera is used for the short distance ranging.

One of the important performance metrics of an ADAS camera is a high frame rate.

When an obstacle such as jumping-in or cutting-in suddenly appears, in order for the ADAS camera to cause the automobile to safely decelerate or stop, these obstacles need to be detected as soon as possible. To do so, a frame rate at which the camera performs image capturing needs to be increased to shorten a detection cycle of the jumping-in and the cutting-in.

As one of techniques for this high frame rate, a single photon avalanche diode (SPAD) sensor camera using a SPAD sensor has been proposed in Japanese Patent Laid-Open No. 2022-106660. This SPAD sensor is a sensor using a photon counter and has a high frame rate readout function in addition to a high sensitivity. Due to a characteristic of a photon counter, since a luminance value of a pixel is stored digitally, the luminance value can be read out again and again. For this reason, image data can be acquired in an early stage when a default exposure time has not been reached. In other words, the luminance value can be read out multiple times at any time points during one frame (i.e. any time points within the time taken to capture one frame, while said frame is being captured). With this configuration, it is possible to achieve a higher frame rate than that of an ordinary CMOS sensor.

However, in the above-described related art example, it may be difficult to shorten the detection cycle of the jumping-in and the cutting-in. This case includes a case where an ambient illuminance drops. Similarly as in the CMOS sensor, the exposure time is shorter, a signal-to-noise ratio (SNR) is lower and a ranging accuracy is lower in the SPAD sensor camera too. Therefore, in a case where the ambient illuminance drops, since a ranging image acquired in an early stage from the start of exposure has a low SNR, the ranging accuracy drops, and an obstacle detection performance drops. As a result, in a case where the ambient illuminance is low, since it is difficult to detect an obstacle in an early stage from the exposure time, there is a risk that shortening the detection cycle will prevent an obstacle from being successfully detected.

### SUMMARY

In view of the above, the present disclosure is directed to provide an apparatus which, even in a case where an ambient illuminance drops, reduces a slowdown of a detection cycle of jumping-in and cutting-in depending on a situation.

The present disclosure in its first aspect provides an image capturing apparatus as specified in claim 1. Optional features are specified in claims 2 to 8.

The present disclosure in its second aspect provides an information processing method as specified in claim 9.

The present disclosure in its third aspect provides a storage medium as specified in claim 10.

Features of the present disclosure will become apparent from the following description of embodiments with reference to the attached drawings. The following description of embodiments is described by way of example.

### BRIEF DESCRIPTION OF THE DRAWINGS

Fig. 1 is an overall diagram of the present system.
Fig. 2 is an explanatory diagram for describing a positional relationship on how a camera, another camera, and a camera control unit are positioned.
Fig. 3A illustrates a pixel arrangement of an SPAD-DAF sensor.
Fig. 3B illustrates a pixel arrangement of the SPAD-DAF sensor.
Fig. 4 is an explanatory diagram for describing timings of a frame leading signal, a subframe synchronization signal, and an output DAF ranging image.
Fig. 5 illustrates a classification of state patterns.
Fig. 6 is a sequence diagram for determining a state pattern of DAF ranging.
Fig. 7 illustrates signal processing of the SPAD-DAF sensor.
Fig. 8 is an explanatory diagram for describing an exposure time of each subframe and an SNR.
Fig. 9 is an explanatory diagram for describing measures for a pattern 2.
Fig. 10 is an explanatory diagram for describing measures for a pattern 3.
Fig. 11 is an explanatory diagram for describing measures for a pattern 4.
Fig. 12 is an explanatory diagram for describing a determination sequence on whether the measures for each pattern are adopted.
Fig. 13 is an overall system diagram in a second embodiment.
Fig. 14 is an explanatory diagram for describing determination processing on whether the measures are implemented in each pattern.

### DESCRIPTION OF THE EMBODIMENTS

Hereinafter, embodiments of the invention will be described with reference to the drawings. The following embodiments are not intended to limit the invention set forth in the appended claims. Each of the embodiments of the invention described below can be implemented solely or as a combination of a plurality of the embodiments or features thereof where necessary or where the combination of embodiments or elements or features from individual embodiments is beneficial. A plurality of features are described in the embodiments, but not all the plurality of features are always essential to the invention.

### First Embodiment

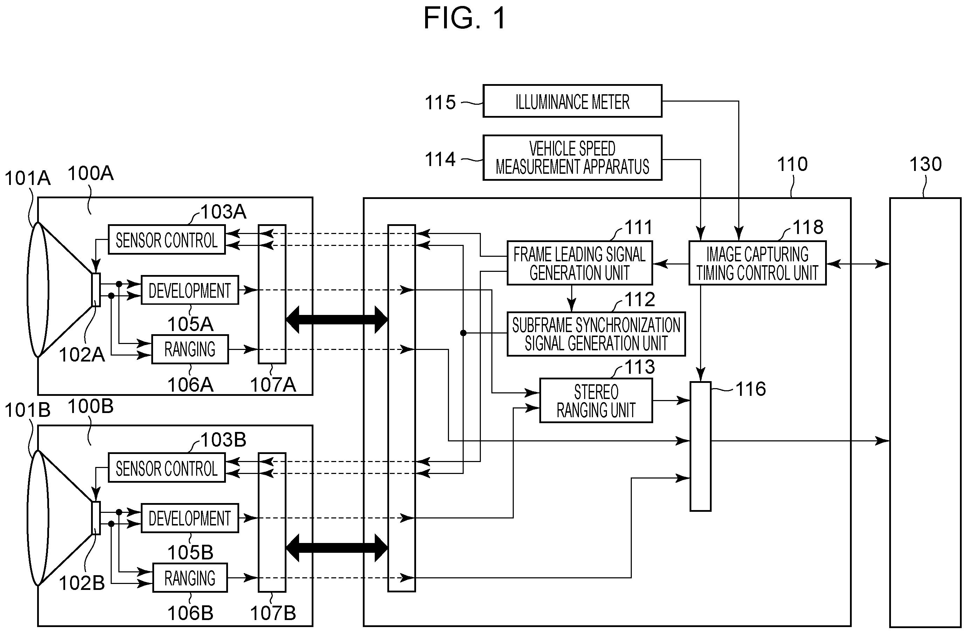

Hereinafter, a first embodiment of the present disclosure will be described. Fig. 1 is an overall diagram of the present system. The present system is constituted by a camera 100A, a camera 100B, and a camera control unit 110.

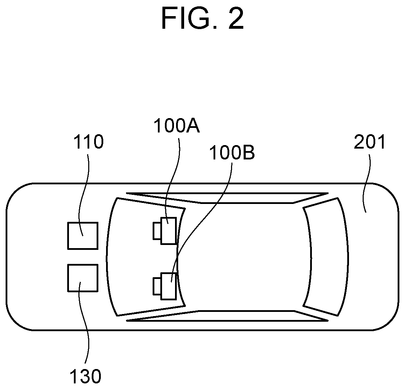

Fig. 2 is an explanatory diagram for describing a positional relationship of the camera 100A, the camera 100B, and the camera control unit 110. The present system is installed in a moving object such as an automobile. With regard to an automobile 201, a left side of the drawing is a front of a vehicle body. The camera 100A and the camera 100B are mounted onto a windshield of the automobile 201. The camera 100A and the camera 100B are SPAD-DAF sensor cameras which are capable of performing DAF ranging and provided with SPAD sensors. In other words, with only the camera 100A, an object in a short distance can be detected based on a result of the DAF ranging (object detection is possible). Similarly, with only the camera 100B, an object in a short distance can be detected based on a result of the DAF ranging. The camera 100A and the camera 100B mounted to the automobile 201 are configured to be substantially parallel to each other, and the camera 100A and the camera 100B can perform stereo ranging. In other words, when the camera 100A and the camera 100B are used, an object in a long distance can be detected based on a result of the stereo ranging. A configuration is adopted in which the camera 100A and the camera 100B are connected to the camera control unit 110 arranged inside a driver's seat console, and the camera 100A and the camera 100B can be controlled from the camera control unit 110. An electronic control unit (ECU) 130 is also installed next to the camera control unit 110, and a ranging image serving as an output of the camera control unit 110 can be transmitted.

With reference to Fig. 1 again, internal configurations of the camera 100A and the camera 100B will be described first. A lens 101A and a lens 101B are lenses that form images on a sensor 102A and a sensor 102B. The sensor 102A and the sensor 102B are SPAD-DAF sensors. Since each of techniques of an SPAD technique and a DAF technique is equivalent to that of a related art example, and detailed descriptions thereof will be omitted.

A sensor structure acquired by combining a SPAD structure with a DAF structure will be described.

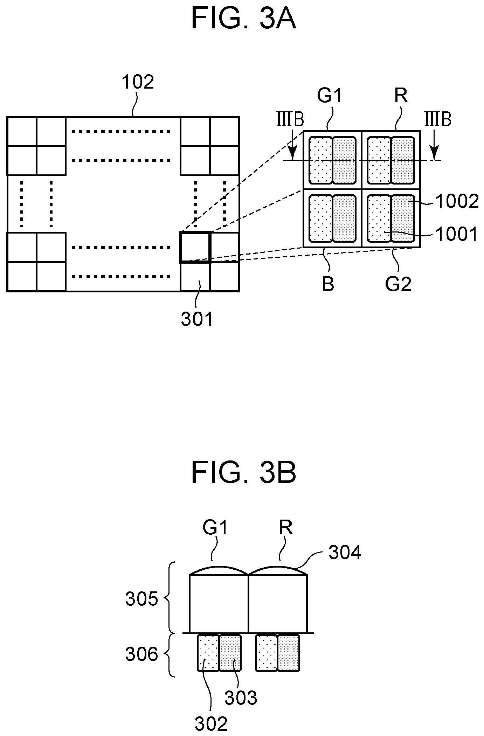

Fig. 3A and Fig. 3B are schematic diagram illustrating a configuration of such an image capturing element as to have two light reception units in a single pixel. Fig. 3A is a top view of the sensor 102A and the sensor 102B as viewed from a light incidence direction. Each of the sensors 102A and 102B is constituted by arranging a plurality of pixel groups 301 in two rows × two columns in a matrix. Each of the pixel groups 301 has a green pixel G1 and a green pixel G2 each of which detects green light, a red pixel R which detects red light, and a blue pixel B which detects blue light. In the pixel group 301, the green pixel G1 and the green pixel G2 are arranged diagonally opposite each other. In addition, each pixel has a first photoelectric conversion unit 302 and a second photoelectric conversion unit 303. With regard to control on the first photoelectric conversion unit 302 and the second photoelectric conversion unit 303, different types of control can be respectively performed on the first photoelectric conversion unit 302 and the second photoelectric conversion unit 303. Fig. 3B is a cross sectional view in a cross section IIIB-IIIB of the pixel group 301 in Fig. 3A. Each pixel is constituted by a microlens 304, a light guide layer 305, and a light reception layer 306. The light guide layer 305 is a light guide member which has the microlens 304 arranged to efficiently guide light incident on the pixel to the light reception layer 306, a color filter arranged to transmit therethrough light of a wavelength band corresponding to a color of light detected by each pixel, and wirings for image readout and for pixel drive. The light reception layer 306 is a photoelectric conversion unit configured to perform photoelectric conversion of the light incident via the light guide layer 305 into an electric signal to be output. The light reception layer 306 has the first photoelectric conversion unit 302 and the second photoelectric conversion unit 303. In addition, in the above-described explanation, as illustrated in Fig. 3A, the green pixel G1, the green pixel G2, the red pixel R, and the blue pixel B are arranged as the pixel group 301, but this arrangement is not limited to the above. An infrared pixel IR or the like configured to receive infrared light may be arranged, and the stated order may be a different order. In addition, in the following explanation, an image signal output from the first photoelectric conversion unit will be described as a first image signal, and an image signal output from the second photoelectric conversion unit will be described as a second image signal. Generally, by acquiring each of the first image signal and the second image signal and calculating a parallax amount (positional shift amount) between the first image signal and the second image signal, ranging can be performed. In addition, when an image for a purpose of viewing is to be acquired, an image acquired by combining the first image signal and the second image signal are combined is acquired.

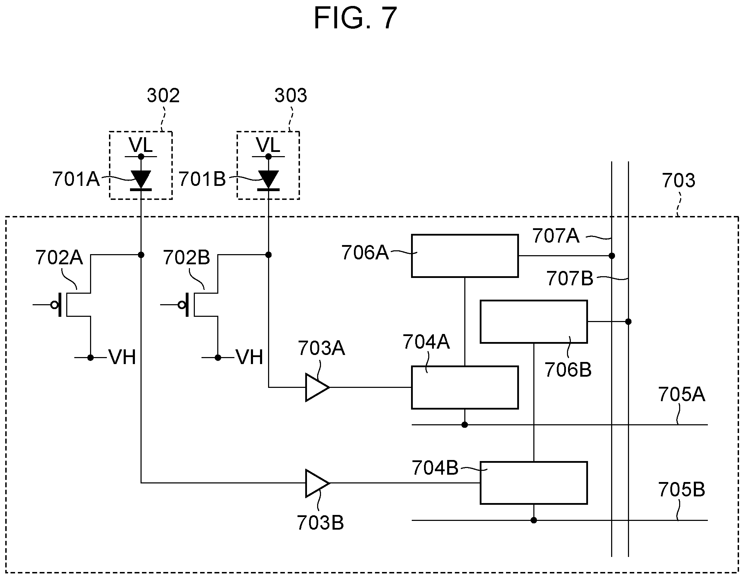

Fig. 7 illustrates an equivalent circuit of a signal processing circuit corresponding to one pixel in the pixel group 301 in Fig. 3A and Fig. 3B. An APD 701A and an APD 701B included in the first photoelectric conversion unit 302 and the second photoelectric conversion unit 303 generate a charge pair according to incident light through photoelectric conversion. One node out of two nodes of the APD 701A and the APD 701B is connected to a power source line through which a drive voltage VL (first voltage) is supplied. The other node out of the two nodes of the APD 701A and the APD 701B is connected to a power source line through which a drive voltage VH (second voltage) that is higher than the voltage VL is supplied.

In Fig. 7, one node of the APD 701A and the APD 701B is an anode, and the other node of the APD 701A and the APD 701B is a cathode. The anode and the cathode of the APD 701A and the APD 701B are supplied with such reverse bias voltages that an avalanche multiplication operation is performed during an exposure time 907. By establishing a state in which the above-described voltages are supplied, electric charges generated by the incident light cause an avalanche multiplication, and an avalanche current is generated.

It is noted that in a case where the reverse bias voltages are supplied, there are a Geiger mode in which the APD is caused to operate at such a voltage difference that a voltage difference between the anode and the cathode is larger than a breakdown voltage and a linear mode in which the APD is caused to operate at such a voltage difference that the voltage difference between the anode and the cathode is close to the breakdown voltage or is lower than or equal to the breakdown voltage. The APD caused to operate in the Geiger mode is referred to as an SPAD. In the case of the SPAD, for example, the voltage VL (first voltage) is -30 V, and the voltage VH (second voltage) is 1 V.

A signal processing circuit 703 has a switch 702A, a switch 702B, a waveform shaping unit 703A, a waveform shaping unit 703B, a counter circuit 704A, and a counter circuit 704B. The switch 702A and the switch 702B are connected to the power source line through which the drive voltage VH is supplied and one node out of the anode and the cathode of the APD 701A and the APD 701B. Then, the switch 702A and the switch 702B switch a resistance value between the APD 701A and the APD 701B and the power source line through which the drive voltage VH is supplied. Herein, for the switching of the resistance value, the resistance value is preferably changed by 10 times or more, and the resistance value is more preferably changed by 100 times or more. Hereinafter, a decrease in the resistance value is also referred to as on of the switch 702A and the switch 702B, and an increase in the resistance value is also referred to as off of the switch 702A and the switch 702B. The switch 702A and the switch 702B function as a load circuit (quench circuit) at the time of signal amplification through the avalanche multiplication and have an ability of suppressing a voltage supplied to the APD 701A and the APD 701B to suppress the avalanche multiplication (quench operation). In addition, the switch 702A and the switch 702B and have an ability of restoring the voltage supplied to the APD 701A and the APD 701B to the drive voltage VH by causing a current equivalent to the voltage drop in the quench operation to flow (recharge operation). The counter circuit 704A and the counter circuit 704B count the number of pulses output from the waveform shaping unit 703A and the waveform shaping unit 703B and hold the count value.

When a control pulse RES is supplied via a drive line 705A and a drive line 705B, a signal held in the counter circuit 704A and the counter circuit 704B is reset. Herein, the counter circuit 704A and the counter circuit 704B generate a signal based on a difference between a count value at the start of an accumulation period and a count value at the end of the accumulation period. A control pulse SEL is supplied to a memory circuit 706A and a memory circuit 706B via the drive line 705A and the drive line 705B to switch electric connection and disconnection between the counter circuit 704A and a vertical signal line 707A and between the counter circuit 704B and a vertical signal line 707B. The memory circuit 706A and the memory circuit 706B function as a memory configured to temporarily store a count value of a counter and output an output signal from the counter circuit 704A and the counter circuit 704B of the pixel to the vertical signal line 707A and the vertical signal line 707B.

It is noted that electric connection may be switched by arranging a switch such as a transistor between the switch 702A and the APD 701A and between the switch 702B and the APD 701B, or between the first photoelectric conversion unit 302 and the signal processing circuit 703 and between the second photoelectric conversion unit 303 and the signal processing circuit 703. Similarly, supply of the voltage VH or the voltage VL to be supplied to the first photoelectric conversion unit 302 and the second photoelectric conversion unit 303 may be electrically switched by using a switch such as a transistor. When such a sensor configuration is adopted, the SPAD-DAF sensor acquired by combining the SPAD technique and the DAF technique is realized.

The overall diagram of the system of Fig. 1 is described again. Development 105A and development 105B constitute a development unit. Since the sensor 102A and the sensor 102B are SPAD-DAF sensors, the sensor 102A and the sensor 102B output two images with a different parallax. In addition, these images are RAW signals in a Bayer array of RGGB.

A parallax is not needed in the development 105A and the development 105B, the two images with the different parallax are added up as the RAW signals to generate a single image. Next, de-Bayer processing and YUV conversion processing are performed to output a color image of YUV422. Depending on a case, to improve an image quality, sensor correction such as sensor defective pixel correction and noise filtering may be included before the development 105A and the development 105B. The development processing of this sort may be general processing of generating a color signal based on RAW signals.

Ranging 106A and ranging 106B constitute a ranging unit. In the ranging unit, a DAF ranging image is generated based on two RAW images (a right eye image and a left eye image) with different view points from the sensor 102A and the sensor 102B. A ranging image has a distance value instead of a luminance value in a general developed image. A distance value is provided pixel by pixel, and as the value is larger, it is represented that the distance is greater. Since a distance calculation method based on the DAF ranging is similar to a related art example, a detailed description herein will be omitted. A frame leading signal and a subframe synchronization signal which are generated by the camera control unit 110 are input to sensor control 103A and sensor control 103B to control image capturing timings of the sensor 102A and the sensor 102B. Details of the timings will be described below.

Next, the camera control unit 110 will be described. A frame leading signal generation unit 111 generates a frame leading signal for identifying leading of a frame. As this frame leading signal, a frame leading signal A for the camera 100A and a frame leading signal B for the camera 100B can be separately generated to be transmitted to the sensor control 103A and the sensor control 103B. The image capturing timings of the camera 100A and the camera 100B can be changed based on this signal. To be synchronized with a subframe synchronization signal generation unit 112, the frame leading signal A is transmitted to the subframe synchronization signal generation unit 112.

The subframe synchronization signal generation unit 112 generates a subframe synchronization signal for synchronizing subframes of video signals of the camera 100A and the camera 100B based on the frame leading signal from the frame leading signal generation unit 111. Since the subframe synchronization signal transmits a common signal to the camera 100A and the camera 100B, developed images from the camera 100A and the camera 100B and the DAF ranging image are synchronized on a subframe-by-subframe basis. Since a relationship between this frame leading signal and the subframe synchronization signal and timings are important aspects of the present application, detailed descriptions will be described below.

A stereo ranging unit 113 is a circuit configured to calculate a stereo ranging image. Inputs include a developed image of the camera 100A and a developed image of the camera 100B. These two developed images are equivalent to the images (the right eye image and the left eye image) with a different parallax similarly to that at the time of the DAF ranging. The stereo ranging unit 113 calculates a stereo ranging image based on these two images (the right eye image and the left eye image).

A vehicle speed measurement apparatus 114 is a speed measurement apparatus for an automobile. The vehicle speed measurement apparatus 114 can measure the number of rotations of a tire of the automobile, and a speed of the automobile can be calculated from a radius of the tire and the number of rotations. An illuminance meter 115 is an ambient illuminance meter and measures an illuminance from a subject incident on the camera (ambient illuminance detection unit). Values of the speed measurement apparatus and the illuminance meter 115 are transmitted to an image capturing timing control unit 118.

A SW 116 is a switching circuit for the ranging image. Input images include the stereo ranging image output by the stereo ranging unit 113, the DAF ranging image output by the ranging 106A, and the DAF ranging image output by the ranging 106B. The ranging image to be output is decided under control of the image capturing timing control unit 118.

The image capturing timing control unit 118 controls the frame leading signal generation unit 111, the subframe synchronization signal generation unit 112, and the SW 116. The speed measurement apparatus 114 and the illuminance meter 115 perform measurements at regular intervals in response to commands from the image capturing timing control unit 118 to acquire values by the image capturing timing control unit 118. By using these two measured values, synchronization control and control of the SW116 are performed. Since this is an important aspect of the present application, a detail will be described below.

An electronic control unit (ECU) 130 is configured to receive a ranging image generated by the present system, and the ranging image is used as determination information for automatic deceleration or automatic stop of the automobile. The present system is concerned with the steps performed up to the generation of the ranging image, and therefore descriptions on recognition of an obstacle, deceleration determination for the automobile, or the like will be omitted.

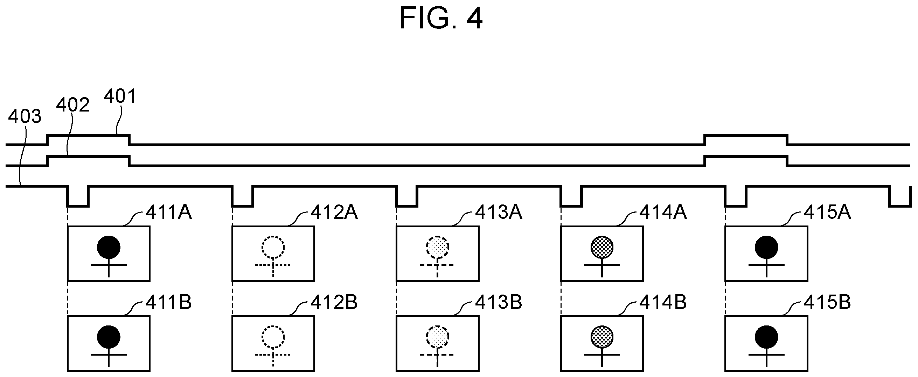

Next, the image capturing timing control unit 118 that is one of important aspects in the present application will be described. Fig. 4 is an explanatory diagram for describing timings of the frame leading signal, the subframe synchronization signal, and the DAF ranging image that is to be output. The frame leading signal may also be mentioned as an exposure start timing. Fig. 4 illustrates a signal 401 as the frame leading signal A, a signal 402 as the frame leading signal B, and a signal 403 as the subframe synchronization signal. Images 411A and 415A are the frame ranging images of the camera 100A, and images 411B and 415B are the frame ranging images of the camera 100B. Images 412A, 413A, and 414A are the subframe ranging images of the camera 100A, and images 412B, 413B, and 414B are the subframe ranging images of the camera 100B. Falling of the subframe synchronization signal represents a subframe start timing. The frame leading signal is High active and is a signal which indicates, in a case where the frame leading signal is High when the subframe synchronization signal falls, that the subframe is the leading of the frame. At this time, since the timing of the signal 401 as the frame leading signal A is aligned with the timing of the signal 402 as the frame leading signal B (the exposure start timings match), the image output timings of the images 411A to 415A and the image output timings of the images 411B to 415B are aligned.

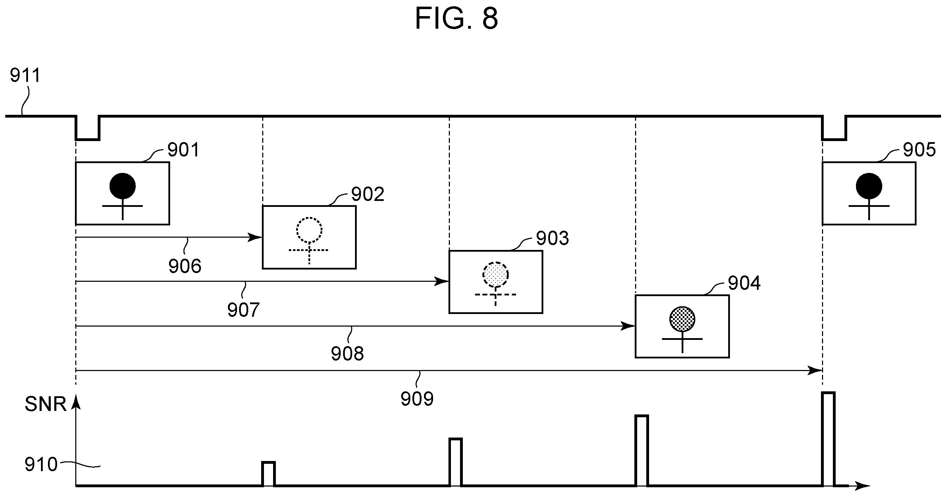

Next, a relationship between an output of the SPAD sensor and an SNR will be described. Fig. 8 illustrates a relationship between the exposure time and the SNR of the frame ranging images and the subframe ranging images. A horizontal axis of Fig. 8 represents time. Fig. 8 illustrates an exposure start timing 911, and a falling timing is an exposure start timing. Since the SPAD sensor can read out the luminance value multiple times at any timing in less than one frame, the subframe ranging images can be read out as follows. Images 902, 903, and 904 are the subframe ranging images which are read out before one frame time has reached, and images 901 and 905 are the frame ranging images generated through the exposure for the one frame time. Fig. 8 also illustrates one frame time 909 which is an exposure time for the image 901 and the image 905. Exposure times 906, 907, and 908 respectively correspond to the image 902, the image 903, and the image 904. The exposure times 906, 907, and 908 are respectively durations of 1/4, 2/4, and 3/4 of the one frame. An SNR 910 indicates an SNR of each of the subframe ranging images and the frame ranging images in which a vertical axis represents a signal-to-noise ratio (hereinafter, an SNR). In the present explanation, the exposure time of the subframe corresponds to a time acquired by dividing the frame into four parts, but the number of divisions and a time interval are not limited to the above. Similarly as in a CMOS sensor, as the exposure time is shorter, the SNR is further reduced in the SPAD-DAF sensor camera too, and the ranging accuracy is also further reduced. Therefore, in a case where the ambient illuminance drops, the subframe ranging image with the short exposure time such as the image 902 or the image 903 does not satisfies the SNR necessary for the ranging, and a probability is high that an image with a reduced ranging accuracy is acquired.

The image capturing timing control unit 118 determines whether or not the DAF ranging image can be used based on the ambient illuminance. In other words, the image capturing timing control unit 118 determines whether or not an object can be detected.

The image capturing timing control unit 118 also determines whether or not two images to be used for the stereo ranging can be used based on the ambient illuminance. In other words, whether or not the DAF ranging image can be used based on the ambient illuminance. In other words, the image capturing timing control unit 118 determines whether or not an object can be detected (and may be referred to as an object detection determination unit). The image capturing timing control unit 118 may only determine whether the DAF ranging image can be used based, and/or whether two images to be used for the stereo ranging can be used.

Hereinafter, what states the DAF ranging image and the two images used for the stereo ranging are in will be described based on state patterns.

### State Patterns 1 to 5

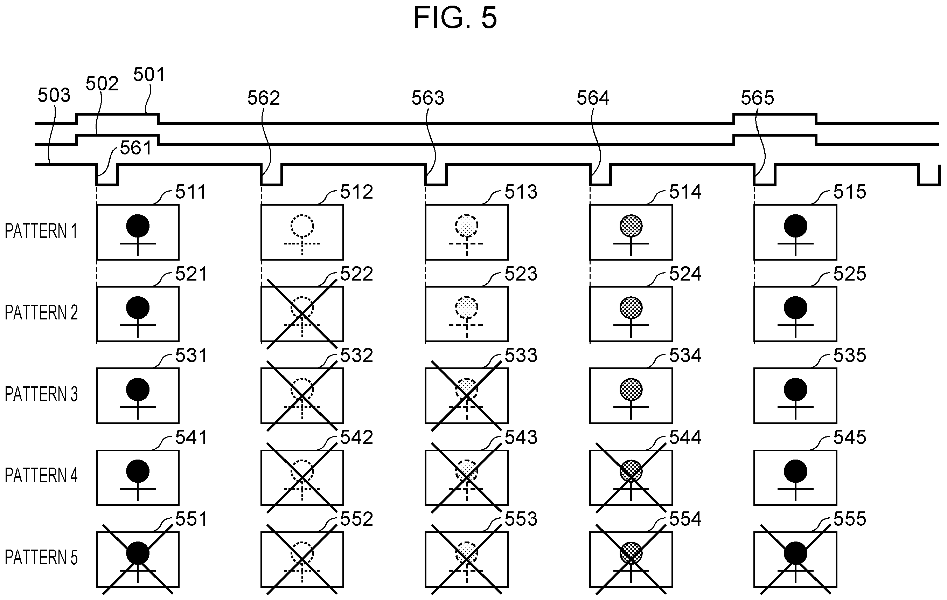

Fig. 5 illustrates a classification of state patterns. Fig. 5 illustrates a frame leading signal A 501, a frame leading signal B 502, a subframe synchronization signal 503, and timings 561 to 565 of respective subframes.

A pattern 1 represents images 511 and 515 as the frame ranging images and images 512 to 514 as the subframe ranging images. In this pattern, all the images 511 to 515 have a satisfactory SNR, and an obstacle on a travel path can be detected in all the frames and the subframes.

A pattern 2 represents images 521 and 525 as the frame ranging images and images 522 to 524 as the subframe ranging images. In this pattern, only the image 522 has an unsatisfactory SNR, and a state is established where the obstacle on the travel path is not to be detected, but on the other hand, the remaining images 521 and 523 to 525 have a satisfactory SNR, and the obstacle on the travel path can be detected in the frames and the subframes.

A pattern 3 represents images 531 and 535 as the frame ranging images and images 532 to 534 as the subframe ranging images. In this pattern, the images 532 and 533 have an unsatisfactory SNR, and a state is established where the obstacle on the travel path is not to be detected, but on the other hand, the remaining images 531, 534, and 535 have a satisfactory SNR, and the obstacle on the travel path can be detected in the frames and the subframes.

A pattern 4 represents images 541 and 545 as the frame ranging images and the images 542 to 544 as the subframe ranging images. In this pattern, the images 542 to 544 that are the subframes have an unsatisfactory SNR, and a state is established where the obstacle on the travel path is not to be detected, but on the other hand, the remaining images 541 and 545 have a satisfactory SNR, and the obstacle on the travel path can be detected.

A pattern 5 represents images 551 and 555 as the frame ranging images and images 552 to 554 as the subframe ranging images. In this pattern, all the images 551 to 555 have an unsatisfactory SNR, and a state is established where the obstacle on the travel path is not to be detected.

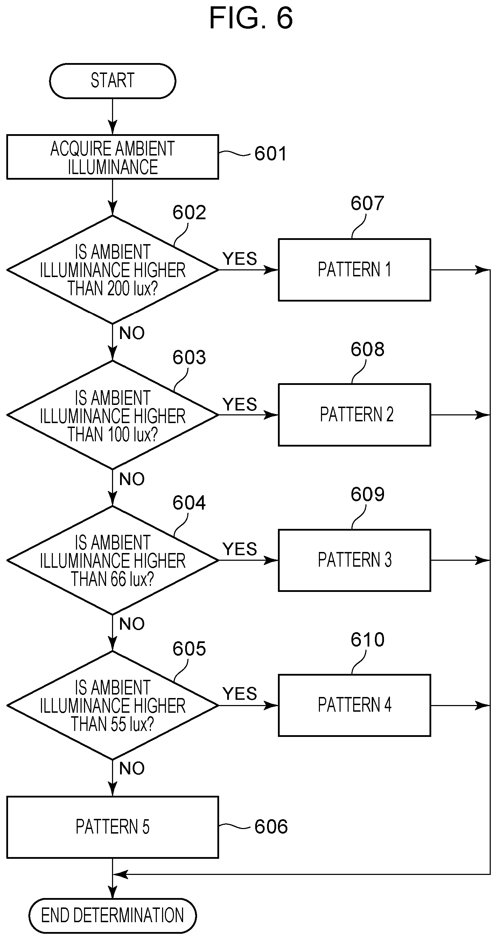

Next, a method of determining states of the DAF ranging images of the camera 100A and the camera 100B among states corresponding to the pattern 1 to the pattern 5 will be described. In the present embodiment, a relationship between the ambient illuminance and the SNR of the DAF ranging image is measured in advance. A measurement limit of the ranging is determined by sorting, as parameters, a material, a color, and the like of a surface of an obstacle to be a subject for the camera 100A and the camera 100B. A sequence for determining a pattern is illustrated in Fig. 6. In 601, an ambient illuminance is acquired from the illuminance meter 115 of Fig. 1. In 602, it is determined whether the ambient illuminance acquired in 601 is higher than 200 lux, and when the ambient illuminance is higher than 200 lux, the processing shifts to 607. In processing 607, it is determined that the state is in the pattern 1 of Fig. 5, and the determination is ended. When it is determined in 602 that the ambient illuminance is lower than 200 lux, the processing shifts to 603. In 603, it is determined whether the ambient illuminance acquired in 601 is higher than 100 lux, and when the ambient illuminance is higher than 100 lux, the processing shifts to 608. In processing in 608, it is determined that the state is in the pattern 2 of Fig. 5, and the determination is ended. When it is determined in 603 that the ambient illuminance is lower than 100 lux, the processing shifts to 604. In 604, it is determined whether the ambient illuminance acquired in 601 is higher than 66 lux, and when the ambient illuminance is higher than 66 lux, the processing shifts to 609. In processing 609, it is determined that the state is in the pattern 3 of Fig. 5, and the determination is ended. When it is determined in 604 that the ambient illuminance is lower than 66 lux, the processing shifts to 605. In 605, it is determined whether the ambient illuminance acquired in 601 is higher than 55 lux, and when the ambient illuminance is higher than 55 lux, the processing shifts to 610. In processing 610, it is determined that the state is in the pattern 4 of Fig. 5, and the determination is ended. When it is determined in 605 that the ambient illuminance is lower than 55 lux, it is determined that the state is in the pattern 5 of Fig. 5, and the determination is ended. The current situation is determined by using this sequence.

Next, measures for each pattern will be described.

Since the subframe in which the obstacle on the travel path is not to be detected does not exist in the pattern 1, no measures are needed.

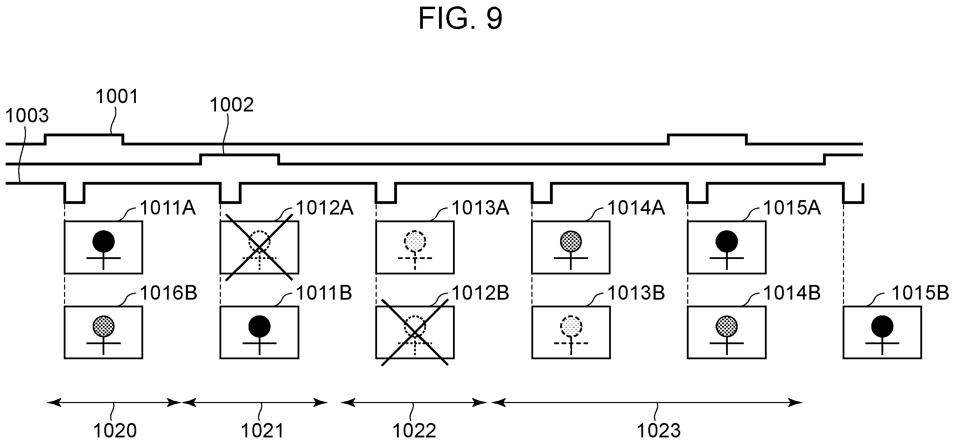

Fig. 9 illustrates the measures for the pattern 2. Fig. 9 illustrates a signal 1001 as the frame leading signal A, a signal 1002 as the frame leading signal B, and a signal 1003 as the subframe synchronization signal. Images 1011A and 1015A are the frame ranging images of the camera 100A, and images 1011B and 1015B are the frame ranging images of the camera 100B. Images 1012A, 1013A, and 1014A are the subframe ranging images of the camera 100A, and 1012B, 1013B, 1014B, and 1016B are the subframe ranging images of the camera 100B. In the pattern 2, since the obstacle on the travel path is not to be detected based on the images 1012A and 1012B that are the subframe ranging images, those images are crossed out.

As in Fig. 5, when the camera 100A and the camera 100B are caused to operate at timings before the measures are taken while the frame leading signal A 501 and the frame leading signal B 502 are set to be the same timing, the subframe ranging images in which the obstacle on the travel path is not to be detected are output at the same time. For this reason, like the image 522 of Fig. 5, a period of the subframe for one image becomes a period during which the jumping-in and the cutting-in is not to be detected.

In view of the above, by adopting the present timings, although only the DAF ranging is performed during the period of the subframes for two images, it becomes possible to appropriately detect the jumping-in and the cutting-in at subframe intervals.

Specifically, the signal 1001 and the signal 1002 are set by being shifted by one subframe. In other words, exposure start timing settings are shifted by one subframe. Therefore, commands are issued from the image capturing timing control unit 118 in a manner that the SW 116 outputs the stereo ranging image during a period 1020, the SW 116 outputs the DAF ranging image B during a period 1021, the SW 116 outputs a DAF ranging image A during a period 1022, and the SW 116 outputs the stereo ranging image during a period 1023. In the situation of the pattern 2, whether the measures are adopted depends on a condition, which will be described later.

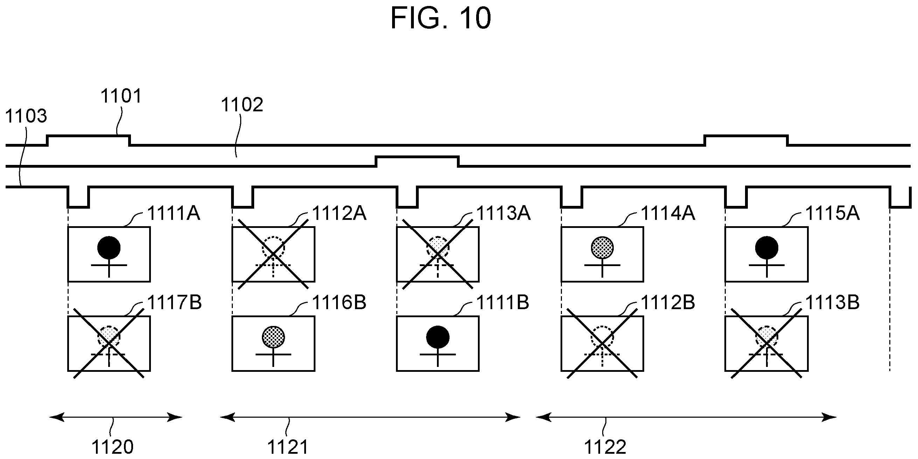

Fig. 10 illustrates the measures for the pattern 3. Fig. 10 illustrates a signal 1101 as the frame leading signal A, a signal 1102 as the frame leading signal B, and a signal 1103 as the subframe synchronization signal. Images 1111A and 1115A are the frame ranging images of the camera 100A, and an image 1111B is the frame ranging image of the camera 100B. Images 1112A, 1113A, and 1114A are the subframe ranging images of the camera 100A, and images 1112B, 1113B, 1116B, and 1117B are the subframe ranging images of the camera 100B. In the pattern 3, since the obstacle on the travel path is not to be detected based on the images 1112A, 1113A, 1112B, 1113B, and 1117B that are the subframe ranging images, those images are crossed out.

As in Fig. 5, when the camera 100A and the camera 100B are caused to operate at timings before the measures are taken while the frame leading signal A 501 and the frame leading signal B 502 are set to be the same timing, the subframe ranging images in which the obstacle on the travel path is not to be detected are output at the same time. For this reason, like the images 532 and 533 of Fig. 5, a period of the subframes for two images becomes a period during which the jumping-in and the cutting-in is not to be detected.

In view of the above, by adopting the present timings, although only the DAF ranging is performed, it becomes possible to appropriately detect the jumping-in and the cutting-in at the subframe intervals. Specifically, the signal 1001 and the signal 1002 are set by being shifted by two subframes. In other words, the exposure start timing settings are shifted by two subframes. Therefore, commands are issued from the image capturing timing control unit 118 in a manner that the SW 116 outputs the DAF ranging image A during a period 1120, the SW 116 outputs the DAF ranging image B during a period 1121, and the SW 116 outputs the DAF ranging image A during a period 1122. In the situation of the pattern 3, whether the measures are adopted depends on a condition, which will be described later.

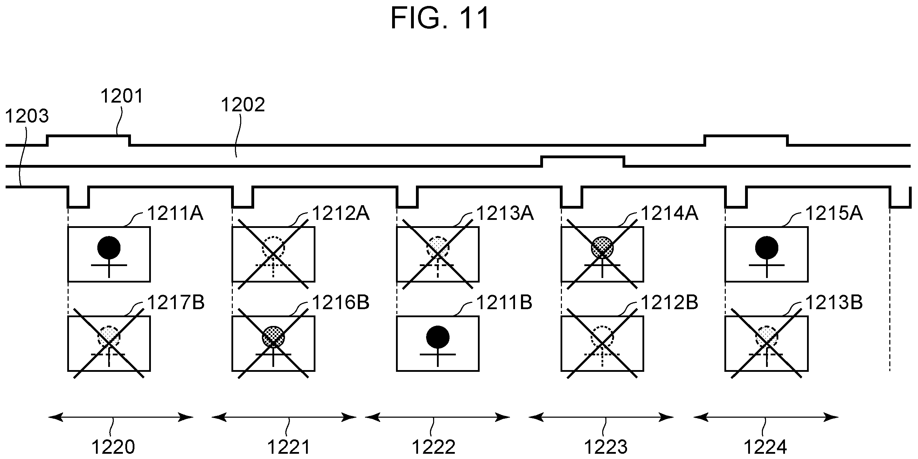

Fig. 11 illustrates the measures for the pattern 4. Fig. 11 illustrates a signal 1201 as the frame leading signal A, a signal 1202 as the frame leading signal B, and a signal 1203 as the subframe synchronization signal. Images 1211A and 1215A are the frame ranging images of the camera 100A, and an image 1211B is the frame ranging image of the camera 100B. Images 1212A, 1213A, and 1214A are the subframe ranging images of the camera 100A, and 1212B, 1213B, and 1217B are the subframe ranging images of the camera 100B. In the pattern 4, since the obstacle on the travel path is not to be detected based on the images 1212A, 1213A, 1212B, 1213B, 1216B, and 1217B that are the subframe ranging images, those images are crossed out.

As in Fig. 5, when the camera 100A and the camera 100B are caused to operate at timings before the measures are taken while the frame leading signal A 501 and the frame leading signal B 502 are set to be the same timing, the subframe ranging images in which the obstacle on the travel path is not to be detected are output at the same time. For this reason, likes the images 542, 543, and 544 of Fig. 5, a period of the subframes for three images becomes a period during which the jumping-in and the cutting-in is not to be detected. In view of the above, by adopting the present timings, it becomes possible to detect the jumping-in and the cutting-in at a timing of one in two subframe periods. Specifically, the signal 1001 and the signal 1002 are set by being shifted by three subframes. In other words, the exposure start timing settings are shifted by three subframes. Therefore, commands are issued from the image capturing timing control unit 118 in a manner that the SW 116 outputs the DAF ranging image A during a period 1220, the SW 116 outputs the DAF ranging image B during a period 1222, and the SW 116 outputs the DAF ranging image A during a period 1224. Since a period 1221 and a period 1223 are periods during which the ranging is not to be performed, data in which ranging values are filled with 0 is supplied to the ECU 130. By an agreement with the ECU 130, a rule that the ranging is not possible in a case where the ranging values are 0 is included in a specification in advance, so that it can be determined that the ranging is not possible in the ECU 130. In the situation of the pattern 4, whether the measures are adopted depends on a condition, which will be described later.

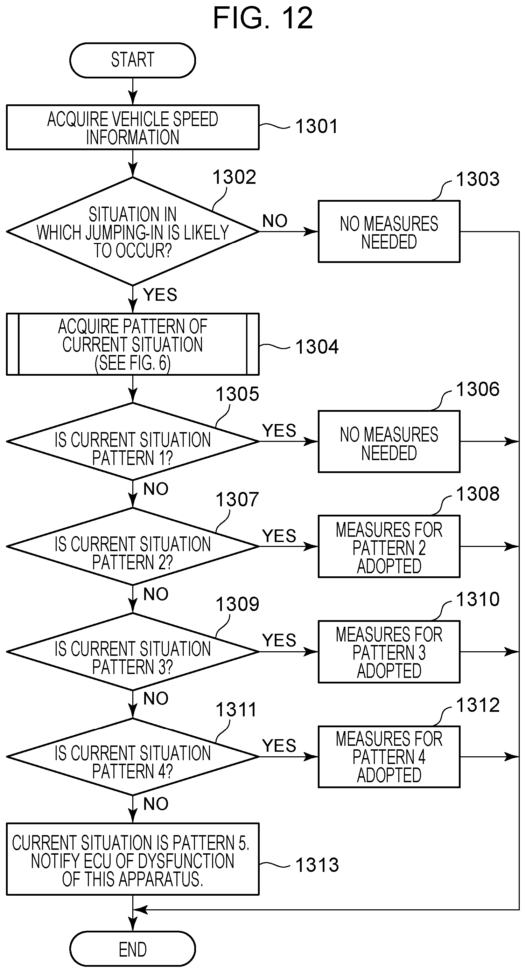

Finally, the determination on whether the measures are adopted in each pattern will be described. As explained thus far, when the measures are implemented, it becomes possible to minimize the subframes in which the ranging is not to be performed. It is noted however that instead of adopting the measures all the time, the measures are adopted only in a case where the measures are needed. Fig. 12 is an explanatory diagram for describing a determination sequence on whether the measures for each pattern are adopted.

In processing 1301, vehicle speed information is acquired from an automobile (speed acquisition unit). A reason why the vehicle speed information is acquired is to determine in processing 1302 whether or not jumping-in is likely to occur in a situation (situation determination unit). In the present application, three scenes are expected as the situation in which the jumping-in is likely to occur.

### Residential area

### Urban area with shops on both sides of a road with on-street parking on shoulders of the road

### In a traffic jam regardless of highways/roads

1) In a residential area, jumping-in of a person such as a child, jumping-in of an animal, and jumping-in of a bicycle are expected. There are many intersections, and it is necessary to slow down and drive carefully. 2) In an urban area, there are a lot of on-street parking, and a person, an animal, and a bicycle crossing through parking spaces are expected, so that it is necessary to slow down and drive carefully. 3) In a traffic jam too, automobiles cutting in from both sides, a motorcycle slipping through, and the like are expected, so that it is necessary to slow down and drive carefully. Any of 1) to 3) is a scene for inevitably slowing down and driving carefully. Therefore, in the processing 1302, a case where the automobile travels at a speed of 40 km/h or lower is determined as the situation where the jumping-in is likely to occur.

In other words, in a case where the speed of the automobile is lower than or equal to a threshold, the situation in which the object detection is needed is determined.

On the other hand, in a case where the automobile travels at the threshold or higher, a scene is expected where a possibility of jumping-in is reduced, such as a wide and uncrowded road where the travelling speed can be fast or an uncongested highway. When it is determined in the processing 1302 that the state is not the situation where the jumping-in is likely to occur, since no measures are needed in any of the patterns, the processing shifts to 1303 to determine that no measures are needed. When it is determined in the processing 1302 that the state is the situation where the jumping-in is likely to occur, in processing 1304, a pattern of the current situation is acquired. In processing 1305, it is checked whether or not the current situation is the pattern 1. In case of YES, it is determined in processing 1306 that no measures are needed, and the processing is ended.

In case of NO, the processing shifts to processing 1307. In the processing 1307, it is checked whether or not the current situation is the pattern 2. In case of YES, it is determined in processing 1308 that no measures are needed, and the processing is ended. In case of NO, the processing shifts to processing 1309. In the processing 1309, it is checked whether or not the current situation is the pattern 3. In case of YES, it is determined in processing 1310 that no measures are needed, and the processing is ended. In case of NO, the processing shifts to processing 1311. In the processing 1311, it is checked whether or not the current situation is the pattern 4. In case of YES, it is determined in processing 1312 that no measures are needed, and the processing is ended. In case of NO, the processing shifts to processing 1313. Since the current situation is the pattern 5, the ECU is notified that the apparatus is in a dysfunctional state, and the processing is ended.

### Second Embodiment

In the first embodiment, when the determination is performed on whether the measures are implemented in each pattern (description on Fig. 12), the determination on the situation in which the jumping-in is likely to occur is performed based on the determination using only the speed of the automobile.

In a second embodiment, an example will be explained in which travelling environment information from the ECU is acquired to perform the determination in a comprehensive manner. In the second embodiment, only a difference from the first embodiment will be described.

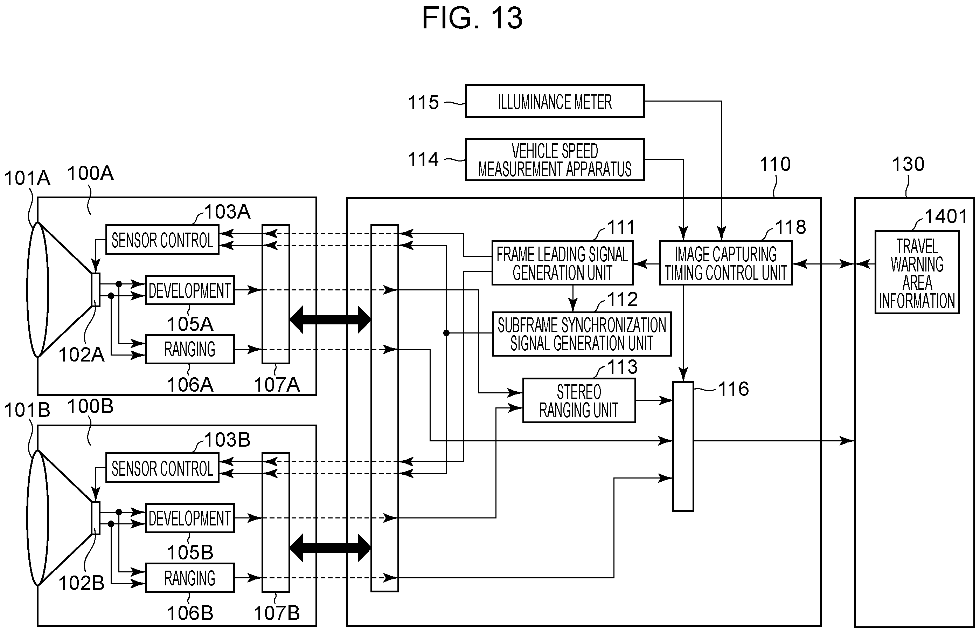

Fig. 13 is an overall system diagram in the second embodiment. A component similar to that in Fig. 1 that is the overall diagram of the system in the first embodiment is assigned with the same reference numeral. A difference from the first embodiment is travel warning area information 1401 arranged in the ECU 130. The travel warning area information refers to a flag (1 bit) indicating a travel warning area saved in a car navigation system which is not illustrated in the drawing and is connected to the ECU 130. Since Global Positioning System (GPS) (not illustrated) is connected to the car navigation system, it is possible to figure out a current location. A configuration is established in which when the current location enters the travel warning area saved in the car navigation system, the flag is transmitted to the image capturing timing control unit 118 as the travel warning area information. In the second embodiment, the travel warning area information is set as data saved in the car navigation system but may be updated through over the top (OTT) or the like.

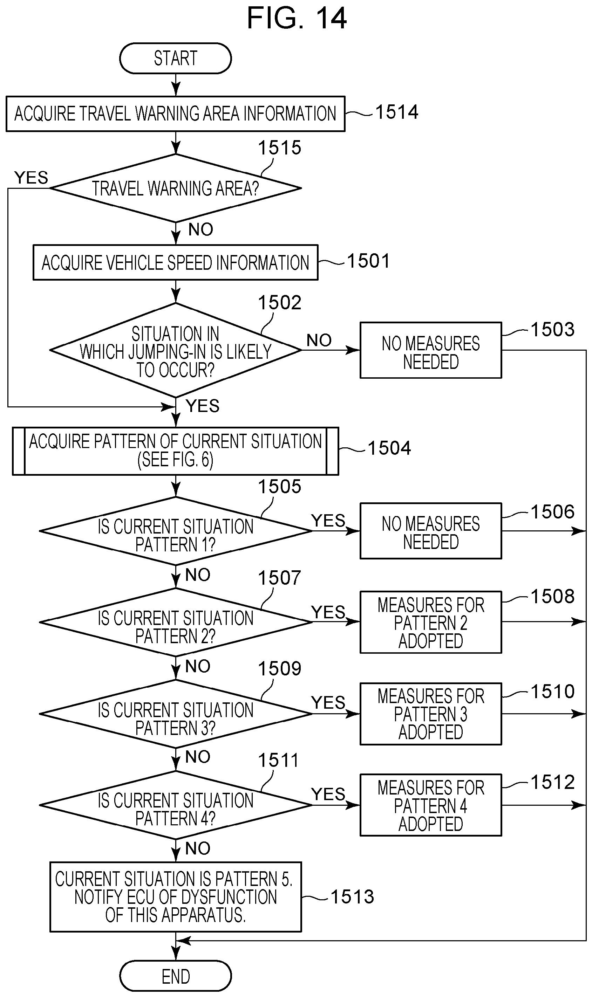

Fig. 14 is an explanatory diagram for describing a method of determining whether measures are implemented in each pattern by using both the acquired travel warning area information and the vehicle speed.

In processing 1514, the travel warning area information is acquired from the ECU 130. In processing 1515, the travel warning area information is checked, and in case of being active, the processing shifts to 1504 (external situation determination unit). In case of not being active, the processing shifts to 1501. In the processing 1501, a vehicle speed is acquired. In processing 1502, in a case where the automobile travels at a speed of 40 km/h or lower, the situation in which the jumping-in is likely to occur is determined. When it is determined in the processing 1502 that the state is not the situation where the jumping-in is likely to occur, since no measures are needed in any of the patterns, the processing shifts to 1503, and it is determined that no measures are needed. In the processing 1502, when it is determined that the state is the situation in which the jumping-in is likely to occur, in the processing 1504, a pattern of the current situation is acquired. In processing 1505, it is checked whether or not the current situation is the pattern 1. In case of YES, it is determined in processing in 1506 that no measures are needed, and the processing is ended.

In case of NO, the processing shifts to processing 1507. In the processing 1507, it is checked whether or not the current situation is the pattern 2. In case of YES, it is determined in processing in 1508 that no measures are needed, and the processing is ended. In case of NO, the processing shifts to processing 1509. In the processing 1509, it is checked whether or not the current situation is the pattern 3. In case of YES, it is determined in processing in 1510 that no measures are needed, and the processing is ended. In case of NO, the processing shifts to processing 1511. In the processing 1511, it is checked whether or not the current situation is the pattern 4. In case of YES, it is determined in processing in 1512 that no measures are needed, and the processing is ended. In case of NO, the processing shifts to processing 1513. Since the current situation is the pattern 5, the ECU is notified that the apparatus is in the dysfunctional state, and the processing is ended.

The present disclosure has been described above by way of embodiments, but the present disclosure is not limited to these specific embodiments, and various modes within a scope without departing from the gist of this disclosure are also included in the present disclosure. Some of the above-described embodiments may also be appropriately combined.

In addition, the present disclosure includes a case where a program of software which realizes a function of the above-described embodiments is supplied to a system or an apparatus which has a computer capable of executing a program directly from a recording medium or by using wired/wireless communication, and the program is executed.

Therefore, to realize functional processing of the present disclosure in a computer or an information processing apparatus, a program code itself supplied and installed into the computer and an information processing method also realize the present disclosure. In other words, a computer program itself and the information processing method for realizing the functional processing of the present disclosure are also included in the present disclosure.

In the above-described case, as long as the function of the program is provided, it does not matter what form the program takes, such as an object code, a program to be executed by an interpreter, or script data to be supplied to an OS.

Examples of a recording medium for supplying the program may include, for example, a hard disk drive, a magnetic recording medium such as a magnetic tapes, an optical/magneto-optical storage medium, and a non-volatile semiconductor memory.

In addition, such a method is conceivable as a method of supplying the program that a server on a computer network stores a computer program which constitutes the present disclosure, and a connected client computer downloads the computer program to execute the computer program.

It is possible to provide the apparatus which can, even in a case where the ambient illuminance drops, reduce the slowdown of the detection cycle of the jumping-in and the cutting-in depending on the situation.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, and a memory card.

Various embodiments have been described in detail above but it will be understood that the present disclosure is not limited to these embodiments and encompasses all modifications, variants, alternatives and equivalents falling within the scope of the appended claims.

## Claims

1. An image capturing apparatus comprising at least one processor or circuit configured to function as:
a plurality of image capturing units each of which is configured to be able to read out a luminance value multiple times at any time points during one frame and to be able to perform ranging using an image plane phase difference of a pupil split scheme constituted by one imaging optical system and one image capturing element;
a first object detection unit configured to detect an object by one image capturing unit among the plurality of image capturing units based on a result of the ranging using the image plane phase difference;
a second object detection unit configured to detect an object by two image capturing units (100A, 100B) among the plurality of image capturing units based on a result of stereo ranging;
an object detection determination unit configured to determine whether or not the object can be detected by the second object detection unit; and
an exposure start timing setting unit configured to set, in a case where the object detection determination unit determines that the object can not be detected, an exposure start timing of one of the image capturing units and the exposure start timing of the other of the image capturing units so that the exposure start timings are shifted from each other.

2. The image capturing apparatus according to claim 1, further comprising:
a situation determination unit configured to determine whether or not a situation demands object detection, wherein
in a case where the object detection determination unit determines that the object can not be detected and the situation determination unit determines that the situation demands the object detection, the exposure start timing setting unit sets an exposure start timing of one of the image capturing units to be shifted from the exposure start timing of the other of the image capturing units.

3. The image capturing apparatus according to claim 2, wherein
in a case where the object detection determination unit determines that the object can not be detected or the situation determination unit determines that the situation does not demand the object detection, the exposure start timing setting unit sets exposure start timings of multiple image capturing units of the image capturing units to be matched.

4. The image capturing apparatus according to any one of claims 1 to 3, wherein
the first object detection unit is a compound eye camera provided with a sensor and a lens array having a plurality of lenses in which the image capturing units are arranged on the same plane, and detects the object by outputting a ranging image based on a parallax of a plurality of individual eye images captured by the compound eye camera, and
the second object detection unit detects the object by outputting a ranging image based on a parallax of two image capturing images respectively acquired from two image capturing units.

5. The image capturing apparatus according to any one of claims 1 to 4, wherein
the exposure start timing setting unit shifts the exposure start timing of the other of the image capturing units in a manner that at a timing at which the first object detection unit of one of the image capturing units is not capable of detecting the object, a timing is established at which the first object detection unit of the other of the image capturing units is capable of detecting the object.

6. The image capturing apparatus according to any one of claims 1 to 5, further comprising:
an ambient illuminance detection unit (115) configured to detect an ambient illuminance, wherein
the object detection determination unit determines whether or not the object can be detected by the second object detection unit based on the ambient illuminance.

7. The image capturing apparatus according to claim 2, further comprising:
a speed acquisition unit (114) configured to acquire a speed of a moving object in which the image capturing apparatus is installed, wherein
the situation determination unit determines that the situation demands the object detection in a case where the speed of the moving object is lower than or equal to a threshold.

8. The image capturing apparatus according to claim 2, further comprising:
an external situation determination unit configured to determine whether or not jumping-in or cutting-in of a person, an animal, or a moving object is likely to occur in the situation, wherein
in a case where the external situation determination unit determines that the jumping-in or the cutting-in of the person, the animal, or the moving object is likely to occur in the situation, the situation determination unit determines that the situation demands the object detection.

9. An information processing method executed by an information processing apparatus, the information processing method comprising:
a plurality of image capturing processes each of which is configured to be able to read out a luminance value multiple times at any time points during one frame and to be able to perform ranging using an image plane phase difference of a pupil split scheme constituted by one imaging optical system and one image capturing element;
a first object detection process of detecting an object in one image capturing processes among the plurality of image capturing processes based on a result of the ranging using the image plane phase difference;
a second object detection process of detecting an object in two image capturing processes among the plurality of image capturing processes based on a result of stereo ranging;
an object detection determination process of determining whether or not the object can be detected in the second object detection process; and
an exposure start timing setting process of setting, in a case where the object detection determination process determines that the object can not be detected, an exposure start timing of one of the image capturing processes to be shifted from the exposure start timing of the other of the image capturing processes.

10. A storage medium storing a computer program comprising instructions which, when the program is executed by a computer, cause the computer to carry out each processes of the information processing method according to claim 9.
